# EUROPEAN PATENT SPECIFICATION

(11) **EP 2 448 879 B1**
(45) Date of publication and mention of the grant of the patent: **03.04.2019**
(21) Application number: 10731492.4
(22) Date of filing: 29.06.2010
(51) Int. Cl.: C04B 40/00

(54) **SULPHUR CEMENT PRE-COMPOSITION AND SULPHUR CEMENT PRODUCT**
Schwefelzement-Vorzusammensetzung und Schwefelzementprodukt
Pré-composition de ciment au soufre et produit de ciment au soufre

(30) Priority: 01.07.2009 EP 09164267
(43) Date of publication of application: 09.05.2012
(73) Proprietor: Shell Internationale Research Maatschappij B.V., 2596 HR The Hague (NL)
(72) Inventor: LANKSHEAR, Michael David, NL-1031 HW Amsterdam (NL); VERBIST, Guy Lode Magda Maria, NL-1031 HW Amsterdam (NL)
(74) Representative: Shell Legal Services IP
(86) International application number: PCT/EP2010/059219
(87) International publication number: WO 2011/000837

(56) References cited:
- WO-A-2008/148804
- WO-A-2008/152054
- FR-A- 2 573 420
- GB-A- 2 058 104
- US-A- 4 376 830
- US-A- 4 426 456
- US-A1- 2003 088 034
- "Silicones", 15 April 2003 (2003-04-15), ENCYCLOPEDIA OF POLYMER SCIENCE AND TECHNOLOGY, WILEY, US, PAGE(S) 765 - 841, XP007918236,

## Description

### Field of the Invention

The present invention provides a sulphur cement pre-composition and a process for the preparation of a sulphur cement pre-composition. The invention further provides a sulphur cement product and a process for the preparation of a sulphur cement product.

### Background of the Invention

Sulphur cement generally refers to a product comprising at least sulphur and a filler. To improve the properties of the sulphur cement, the sulphur may be modified using a sulphur modifier, e.g. naphthalene or olefinic compounds such as 5 ethylidene-2-norbornene (ENB) or 5 vinyl-2-norbornene (VNB), dicyclopentadiene, limonene or styrene. Usual sulphur cement fillers are particulate inorganic materials.

Sulphur cement-aggregate composites generally refer to a composite comprising both sulphur cement and aggregate. Examples of sulphur cement-aggregate composites are sulphur mortar, sulphur concrete and sulphur-extended asphalt.

It is known to use organosilane compounds as a stabilising agent in sulphur cement or sulphur cement-aggregate compositions to improve water stability. In US 4,164,428 for example, a modified sulphur composition (often referred to a plasticized sulphur composition) comprising at least 50% by weight of sulphur, a sulphur modifier (often referred to a sulphur plasticizer), a finely divided particulate mineral suspending agent, and an organosilane stabilising agent is disclosed. It is mentioned that suitable organosilanes have the general molecular formula R-Si(OR')₃, wherein R' is a low molecular weight alkyl group and R is an organic radical having at least one functional group, usually bonded to the silicon atom by a short alkyl chain. Gammamercaptopropyltrimethoxysilane is mentioned as a preferred organosilane.

In US 4,376,830 a sulphur cement-aggregate composition comprising a sulphur cement and an aggregate containing an expansive clay and processes for preparing such compositions are disclosed. The processes, and resulting compositions, are characterised by the addition of certain organosilane compounds in the composition prior to solidifying (cooling) the composition. It is mentioned that suitable organosilanes have the formula Z-Si (R₁R₂R₃) , wherein R₁, R₂ and R₃ may be lower alkoxy groups and Z is an organic radical attached to Si via a carbon atom and has at least one molten-sulphur reactive group. Z may for example be mercaptoalkyl. Gammamercaptopropyltrimethoxysilane is mentioned as a preferred organosilane.

In WO 2007/65920, sulphur cement or a sulphur cement-aggregate composite is prepared by admixing an inorganic filler and a polysulphide-containing organosilane, mixing with molten sulphur and solidifying the admixture. This process provides sulphur cement or a sulphur cement-aggregate composite with lower water uptake. A preferred polysulphide-containing organosilane is bis(3-triethyoxysilylpropyl)tetrasulphide.

In WO 2008/148804, a sulphur cement pre-composition is prepared by mixing sulphur with a polysulphide-containing organosilane. The sulphur cement pre-composition can be mixed with particulate inorganic material to provide a sulphur cement product. The sulphur cement products have improved water uptake behaviour. A preferred polysulphide-containing organosilane is bis(3-triethyoxysilylpropyl) tetrasulphide.

The polysulphide-containing organosilanes can be used to provide sulphur cement products with low water uptake. However, it is desirable to find alternative organosilane coupling agents. For example, it would be desirable to have coupling agents that have higher boiling points such that there is less likelihood of evaporation of coupling agent during the manufacture of the sulphur cement product. Alternatively, it would be desirable to have coupling agents that create lower emissions of ethanol during the manufacture of the sulphur cement product. It is desirable to avoid the use of organosilanes such as Gamma mercaptopropyltrimethoxysilane, which has an unpleasant smell and has to be handled with care (dissociation of hydrogen from the organosilane can lead to hydrogen sulphide evolution upon contact with sulphur).

FR 2 573 420 discloses the incorporation of a polysiloxane (specifically dimethyl polysiloxane) into a sulphur cement product. The additive is incorporated at between 0.25 and 2wt% (based upon the weight of the sand and filler) and is said to improve the water resistance of the sulphur cement product.

The present inventors have sought to provide alternative methods for preparing sulphur cement products, whilst retaining low water uptake properties.

### Summary of the Invention

Accordingly, the present invention provides a sulphur cement pre-composition, comprising sulphur and a polysiloxane, which polysiloxane comprises repeat units of general formula (I): 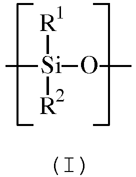 wherein R¹ is an hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

In a further aspect, the invention provides a sulphur cement product, comprising sulphur, a particulate inorganic material and a polysiloxane, which polysiloxane comprises repeat units of formula (I): 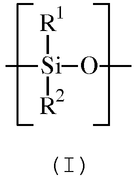 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

In a yet further aspect, the invention provides a process for the preparation of a sulphur cement pre-composition, comprising admixing sulphur with polysiloxane, which polysiloxane comprises repeat units of formula (I): 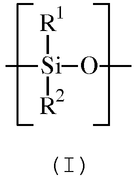 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

In a yet further aspect, the invention provides a process for the preparation of a sulphur cement product comprising the steps of:
(a) admixing sulphur with a polysiloxane, which polysiloxane comprises repeat units of formula (I): 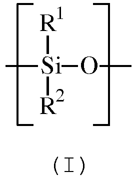 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups, and with a particulate inorganic material at a temperature at which sulphur is molten to obtain a molten sulphur cement product; and
(b) solidifying the molten sulphur cement product.

Also described herein is a wax-based pre-composition comprising wax and a polysiloxane, which polysiloxane comprises repeat units of formula (I). The wax-based pre-composition may be used in a process for the preparation of a sulphur cement product according to the invention.

### Detailed Description of the Invention

Reference herein to a sulphur cement pre-composition is to a composition, which after addition of at least one of sulphur or a particulate inorganic material forms a sulphur cement product, e.g. a sulphur cement, a sulphur mortar, sulphur concrete or sulphur-extended asphalt.

The polysiloxane used in the present invention differs from the polysiloxane employed in FR 2 573 420 in that R¹ is an hydrolysable group and R² is a sulphur reactive functional group, whereas in dimethylpolysiloxane, the substituents are all methyl groups. An effect of using polysiloxanes wherein R² is a sulphur reactive functional group is to improve the interaction between the sulphur and the polysiloxane. An effect of using polysiloxanes wherein R¹ is a hydrolysable group is to improve the interaction between particulate inorganic materials and the polysiloxane in a sulphur cement product. By improving these interactions, the present invention provides effective sulphur cement products.

The sulphur cement pre-composition according to the invention comprises sulphur and a polysiloxane, which polysiloxane comprises repeat units of general formula (I) : 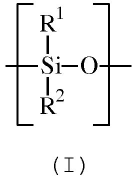 wherein R¹ is an hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

As described herein, R¹ and R² may be the same or different, and each may be chosen from:
(i) sulphur reactive functional groups chosen from alkenyl, alkynyl, amine, thiol or sulphide groups;
(ii) non-reactive functional groups chosen from alkyl groups or aryl groups that are optionally substituted with halo groups, ether groups or epoxy groups; or
(iii) hydrolysable groups,
provided that at least one of R¹ or R² is (i) a sulphur reactive functional group or (iii) a hydrolysable group. According to the invention, R¹ and R² are different and R¹ is an hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

Preferably the hydrolysable group is a C₁₋₅ alkoxy group, for example methoxy or ethoxy.

In a preferred embodiment, the sulphur reactive functional group is an alkenyl group of formula -(CH₂)ₘ-X, wherein m is an integer from 0 to 4 and X is an alkenyl group. Possible X groups are shown below:

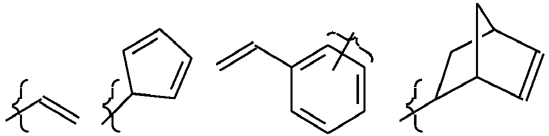

Most preferably the sulphur reactive functional group is a vinyl group.

In another embodiment, the sulphur reactive functional group is a thiol group or sulphide group, for example a thiol group or sulphide group having the formula -(CH₂)ₚ-S_{q}-(CH₂)ᵣ-H, wherein p is an integer from 1 to 4, q is an integer from 1 to 8 and r is 0 or an integer from 1 to 4. In one embodiment, q is 1 and r is 0, such that A is a thiol group. In another embodiment, q is from 2 to 8 and r is from 1 to 4, such that A is a polysulphide group. The sulphide group may be a bridged sulphide group such that a group having the formula - (CH₂)ₚ-S_{q}-(CH₂)ᵣ- connects two repeat units in the same polysiloxane (internal bridging) or connects two repeat units in different polysiloxanes (oligomer bridging).

In yet another embodiment, the sulphur reactive functional group is a primary amine group of formula - (CH₂)ₙ-NH₂, wherein n is an integer from 1 to 4.

As described herein, the non-reactive functional group may be a C₁₋₂₄ alkyl group or an aryl group, such as a phenyl group, that is optionally substituted with halo groups, ether groups or epoxy groups. Preferably the non-reactive functional group may be C₁₋₂₄ alkyl, phenyl or C₁₋₂₄ haloalkyl.

The polysiloxane comprises repeat units of the general formula (I). The number of repeat units is at least two, and is preferably from 2 to 250. Preferably at least 20% of the repeat units are of general formula (I), more preferably at least 50% of the repeat units are of general formula (I), most preferably at least 80% of the repeat units are of general formula (I). In one embodiment of the invention, the polysiloxane consists essentially of repeat units of the general formula (I). To produce a polysiloxane wherein substantially all the repeat units are the same, a single organosiloxane monomer is polymerised. Also, as described herein, the polysiloxane comprises repeat units of the general formula (I) and may additionally comprise repeat units of general formula (II): 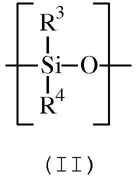 wherein R³ and R⁴ are the same or different, and each is chosen from:
(i) sulphur reactive functional groups chosen from alkenyl, alkynyl, amine, thiol or sulphide groups;
(ii) non-reactive functional groups chosen from alkyl groups or aryl groups that are optionally substituted with halo groups, ether groups or epoxy groups; or
(iii) hydrolysable groups.

It is not necessary that at least one of R³ or R⁴ is a sulphur reactive functional group or a hydrolysable group. To produce a polysiloxane wherein there is more than one type of repeat unit, two different organosiloxane monomers may be co-polymerised. The polysiloxane may comprise three or more different repeat units and may have been produced by co-polymerisation of three or more organosiloxane monomers.

The polysiloxane may comprise sulphide bridges (polysulphide groups joining two siloxane chains) as described in US 6,759,486.

Preferably, the sulphur cement pre-composition comprises at least 0.01 wt% of the polysiloxane, based on the weight of the total composition. More preferably, the sulphur cement pre-composition comprises in the range of from 0.01 to 50wt%, yet more preferably from 0.01 to 20wt%, even more preferably from 0.01 to 10wt% and most preferably 0.01 to 1 wt% of the polysiloxane, based on the weight of the total composition. The preferred amount of polysiloxane is largely determined by the intended use of the sulphur cement pre-composition. For example, if the sulphur cement pre-composition is to be combined with filler and with further sulphur to form a sulphur cement, then the weight percentage of polysiloxane is likely to be high, e.g. from 0.1 to 50wt%, because the sulphur cement pre-composition is effectively a concentrate of the sulphur plus coupling agent. Conversely, if the sulphur cement pre-composition is combined with filler only to form a sulphur cement, then the weight percentage of polysiloxane is likely to be lower, e.g. from 0.01 to 1wt%.

In addition, the sulphur cement pre-composition may comprise a sulphur modifier. Typically, the sulphur cement pre-composition may comprise sulphur modifiers in an amount in the range of from 0.1 to 10 wt% based on the weight of sulphur. Such modifiers are known in the art. Examples of such modifiers are aliphatic or aromatic polysulphides or compounds that form polysulphides upon reaction with sulphur. Examples of compounds that form polysulphides are naphthalene or olefinic compounds such as 5 ethylidene-2-norbornene (ENB) or 5 vinyl-2-norbornene (VNB), dicyclopentadiene, limonene or styrene.

The sulphur cement pre-compositions according to the invention may be advantageously produced off-site and used on-site in small volumes. The sulphur cement pre-composition may contain a concentration of polysiloxane, which is higher than the concentration typically used in a process for preparing a sulphur cement product. When used on-site to prepare for instance a sulphur cement product, such a sulphur cement pre-composition may suitably be added in such amounts to an inorganic material that the need for stabilising agent is satisfied. The sulphur cement product may be completed by adding additional sulphur and other ingredients if not sufficiently present in the sulphur cement pre-composition.

The invention further provides a sulphur cement product, comprising sulphur, a particulate inorganic material, and a polysiloxane, which polysiloxane comprises repeat units of formula (I): 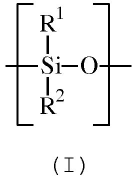 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups. Reference herein to a sulphur cement product is to a sulphur cement or a sulphur cement-aggregate composite.

A sulphur cement refers to a composition comprising sulphur or modified sulphur and a filler. Usual sulphur cement fillers are particulate inorganic materials with an average particle size in the range of from 0.1 µm to 0.1 mm. The filler content of sulphur cement may vary widely, but is preferably in the range of from 1 to 50 wt%, based on the total weight of the sulphur cement.

Sulphur cement-aggregate composites refer to a composite comprising both sulphur cement and a particulate inorganic material aggregate. Examples of sulphur cement-aggregate composites are sulphur mortar, sulphur concrete and sulphur-extended asphalt. Mortar comprises fine aggregate, typically with particles having an average diameter between 0.1 and 5 mm, for example sand, and does not comprise coarse aggregate. Concrete comprises coarse aggregate, typically with particles having an average diameter between 5 and 40 mm, and optionally comprises fine aggregate. Sulphur-extended asphalt comprises aggregate and a binder that contains filler and a residual hydrocarbon fraction, wherein part of the binder has been replaced by sulphur, usually modified sulphur.

Preferably, the particulate inorganic material in the sulphur cement product has oxide or hydroxy groups on its surface. Examples of suitable particulate inorganic materials are silica, fly ash, limestone, quartz, iron oxide, alumina, titania, carbon black, gypsum, talc or mica, sand, gravel, rock or metal-silicates. Such metal silicates are for example formed upon heating heavy metal containing sludge in order to immobilise the metals. More preferably the particulate inorganic material is a silica or a silicate. Examples of such silica or silicates are quartz, sand, metal-silicates (e.g. mica).

The preferred polysiloxane for the sulphur cement product is as outlined for the sulphur cement pre-composition.

Sulphur cement preferably comprises the polysiloxane in the range of from 0.01 to 30wt%, more preferably of from 0.05 to 10wt%, based on the weight of the sulphur cement. Sulphur mortar or sulphur concrete preferably comprises the polysiloxane in the range of from 0.001 to 1wt%, more preferably of from 0.005 to 0.5wt% and most preferably of from 0.01 to 0.1wt%, based upon the weight of the sulphur mortar or sulphur concrete.

The invention further provides a process for the preparation of a sulphur cement pre-composition, comprising admixing sulphur with a polysiloxane, which polysiloxane comprises repeat units of formula (I): 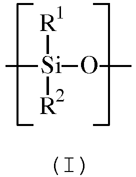 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups. The polysiloxane may be admixed with the sulphur by any means known in the art. The polysiloxane may first be dissolved in a small amount of solvent, for example an alcohol or a hydrocarbon, in order to facilitate the admixing with the sulphur. The solvent preferably has a boiling point such that it evaporates during the admixing step.

Preferably, the sulphur and the polysiloxane are admixed at a temperature at which sulphur is molten. The temperature at which sulphur is molten is typically above 120°C, preferably in the range of from 120 to 150°C, more preferably in the range of from 125 to 140°C. Mixing at temperatures at which the sulphur is molten may provide a homogeneous distribution of the polysiloxane in the sulphur. Preferably the obtained sulphur cement pre-composition is cooled to a temperature at which the sulphur solidifies. The solid sulphur cement pre-composition can be easily stored or transported.

The invention yet further provides a process for the preparation of a sulphur cement product comprising the steps of:
(a) admixing sulphur with a polysiloxane, which polysiloxane comprises repeat units of formula (I): 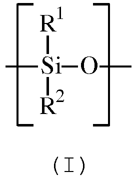 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups, and with a particulate inorganic material at a temperature at which sulphur is molten to obtain a molten sulphur cement product; and
(b) solidifying the molten sulphur cement product.

In one embodiment of the process, a sulphur cement product is prepared by admixing in step (a) a sulphur cement pre-composition according to the invention and a particulate inorganic material at a temperature at which sulphur is molten to obtain a molten sulphur cement product. In another embodiment of the process, a sulphur cement product is prepared by admixing in step (a), elemental or modified sulphur, a polysiloxane, which polysiloxane comprises repeat units of formula (I), and a particulate inorganic material, i.e. the sulphur and polysiloxane are used as individual components rather than as a sulphur cement pre-composition.

In one embodiment of the process, in step (a) the polysiloxane may first be admixed with the particulate inorganic material in a pre-treatment step, and then subsequently the treated particulate inorganic material is admixed with sulphur. The polysiloxane is preferably admixed with the particulate inorganic material by dissolving the polysiloxane in a small amount of solvent, for example an alcohol or a hydrocarbon, and admixing with the particulate inorganic material. The solvent preferably has a boiling point such that it evaporates during the admixing step.

Step (a) is carried out at a temperature at which sulphur is molten, i.e. typically above 120°C, preferably in the range of from 120 to 150°C, more preferably in the range of from 125 to 140°C.

Optionally further ingredients such as sulphur modifiers may be admixed during step (a). Preferably, all ingredients of the sulphur cement product are admixed at a temperature at which sulphur is liquid.

In step (b) the molten sulphur cement product is solidified by cooling the product to a temperature at which the sulphur solidifies.

Also described herein is a wax-based pre-composition comprising wax and a polysiloxane, which polysiloxane comprises repeat units of formula (I). The preferred polysiloxane for the wax-based pre-composition is as outlined for the sulphur cement pre-composition. The wax-based pre-composition can be used in the process of the invention for the preparation of a sulphur cement product. In step (a), the wax-based pre-composition may be mixed with sulphur and with a particulate inorganic material at a temperature at which sulphur is molten to obtain a molten sulphur cement product.

The advantage of using a wax-based pre-composition in the process of the invention is that the coupling agent can be added in the form of a solid composition, ensuring a simple and effective process. The solid composition comprising the coupling agent is stable and can be stored for extended periods.

Preferred waxes for the wax-based pre-composition are paraffin waxes, including paraffin waxes resulting from a Fischer-Tropsch process. The paraffin wax may comprise straight chain alkanes and/or branched chain alkanes. Preferably the alkane chain length is from C30 to about C100. Preferably the melting point of the wax is from 70 to 120°C. Preferably the wax-based pre-composition comprises from 25 to 75wt% wax, based upon the weight of the pre-composition.

The wax-based pre-composition preferably further comprises an inorganic filler. The inorganic filler is preferably chosen from one or more of carbon black, metal carbonates (e.g. calcium carbonate), silica, titania, iron oxide, alumina, asbestos, fly ash, limestone, quartz, gypsum, talc, mica, metal silicates (e.g. calcium silicate) or powdered elemental sulphur. Most preferably the inorganic filler is carbon black, silica or calcium carbonate. The average particle size of the inorganic filler is preferably in the range of from 0.1 µm to 0.1 mm. Preferably the wax-based pre-composition comprises from 25 to 75wt% of inorganic filler, based upon the weight of the pre-composition.

The wax-based pre-composition may further comprise polymer such as polyethylene or an ethylene copolymer (e.g. ethylene vinyl acetate).

In the products and processes of the invention, a single polysiloxane having repeat units of general formula (I) may be used, or two or more different polysiloxanes having repeat units of general formula (I) may be used.

In the products and processes of the invention, a second organosilane additive may be used in combination with the polysiloxane. The second organosilane additive is preferably of the general molecular formula (A) or (B) :

(R⁵O)₃Si-A (A)

(R⁶O)₃Si-A' -Si(OR⁷)₃ (B)

wherein R⁵, R⁶, and R⁷ are independently C₁₋₆ alkyl and are preferably ethyl or methyl groups, A is a univalent functional group chosen from thiol, sulphide, amine, alkenyl, C₁₋₂₄ alkyl or aryl groups, such as a phenyl group and A' is a divalent functional chosen from sulphide, amine, alkenyl, C₁₋₂₄ alkylene group or arylalkylene groups. Possible second organosilane additives are bis(3-triethoxysilylpropyl)tetrasulphide, bis(3-triethoxysilylpropyl)disulphide, styrylethyltrimethoxysilane, propyltriethoxysilane and phenyltriethoxysilane.

By incorporating a blend of the polysiloxane with a second organosilane additive, it may be possible to achieve similar or better properties (e.g. water intrusion properties) whilst reducing the cost of the additives. Third and further organosilanes may used in combination with the polysiloxane and second organosilane. The third and further organosilanes may be of general molecular formula (A) or (B).

The sulphur cement products produced according to the invention are suitable for use in typical sulphur cement product applications. A sulphur cement according to the invention can be combined with aggregate to provide a sulphur-cement aggregate composite. Sulphur concrete according to the invention can be moulded to provide products such as paving materials and sea defences.

### Examples

The invention is further illustrated by means of the following non-limiting examples.

### Preparation of Sulphur Cement Mortars

The sulphur cement mortars were based upon two different formulations:
Quartz filler formulation: 25wt% sulphur, 47wt% norm sand and 28wt% quartz
Fly ash filler formulation: 20wt% sulphur, 65wt% norm sand and 15wt% fly ash

The term "coupling agent" is used to describe the polysiloxane or alternative additives that may improve water intrusion properties. Several methods were used to prepare sulphur cement mortars:

### Method 1: Pre-treatment of Sand with Coupling Agent

Sand and filler were pre-heated in an oven at 150°C; sulphur was pre-heated at 65°C. Mixing was carried out in a stainless steel bowl, which was electronically heated. The sand was put into the bowl after which the coupling agent was added by spraying over the sand surface using a syringe. After two to five minutes, sulphur was added to the sand and mixed until homogeneous. The mixture was then stirred and heated until the sulphur was molten after which the filler was added to the mixture. This mixture was stirred until uniform and repeatedly mixed for a period of from 5 to 40 minutes. It was then poured into pre-heated prism moulds and allowed to cool.

### Method 2: Addition of Coupling Agent to Sand, Filler and Sulphur

Sand and filler were pre-heated in an oven at 150°C; sulphur was pre-heated at 65°C. Mixing was carried out in a stainless steel bowl, which was electronically heated. The sulphur was put into the bowl after which the sand and filler were added and mixed well. The coupling agent was added by spraying using a syringe. After mixing for twenty minutes, the mixture was poured into a pre-heated prism mould and allowed to cool.

### Method 3: Use of Sulphur Pre-composition

Coupling agent was added from a syringe to molten sulphur in a round-bottomed flask that was electrically heated at 140°C and flushed with nitrogen. After approximately five minutes, the mixture was poured from the flask into a thin layer on aluminium foil. The mixture was allowed to cool and solidify, and the solid was broken into smaller pieces by hand. Half of this sulphur pre-composition was "aged" by placing inside a small glass flask containing demineralised water. A lid was secured on the flask and the flask was placed in a water bath at 70°C for a week. Sand and filler were pre-heated in an oven at 150°C. Mixing was carried out in a stainless steel bowl, which was electronically heated. The sand was put into the bowl after which the sulphur pre-composition (aged or unaged) was added. The mixture was then stirred and heated until the sulphur was molten after which the filler was added to the mix. This mix was stirred until uniform and repeatedly mixed for an exact period of 40 minutes. It was then poured into pre-heated prism moulds and allowed to cool.

### Method 4: Use of Wax-based Pre-composition (not according to the invention)

Carbon black was placed in an electrically heated pan and coupling agent was added and mixed using a spatula. Wax was added and the mixture was maintained at 135-140°C for 5-10 minutes. The mixture was poured into a thin layer onto aluminium foil and allowed to cool and solidify. The mix was broken by hand into smaller pieces. Half of the wax-based pre-composition was "aged" by placing inside a small glass flask containing demineralised water. A lid was secured on the flask and the flask was placed in a water bath at 70°C for a week. Sand and filler were pre-heated in an oven at 150°C. Mixing was carried out in a stainless steel bowl, which was electronically heated. The sand was put into the bowl after which the wax-based pre-composition (aged or unaged) was added. Sulphur was then added to the sand and mixed until homogeneous. The mixture was then stirred and heated until the sulphur was molten after which the filler was added to the mix. This mix was stirred until uniform and repeatedly mixed for an exact period of 40 minutes. It was then poured into pre-heated prism moulds and allowed to cool.

### Comparison of Coupling Agents

A polysiloxane coupling agent (polyvinyltriethyoxysilane, PVTES) was compared with its monomeric counterpart (vinyltriethoxysilane, VTES) and with an organosilane coupling agent (bis(triethoxysilylpropyl)tetrasulfide, TESPT). Samples based upon the quartz filler formulation were prepared using Method 1 as outlined above. The weight percentages of coupling agent are based upon the weight of the sulphur cement mortars. The flexural strength and water intrusion of the samples were measured. The results are given in Table 1:

**Table 1**

| | Coupling Agent | Flexural Strength (N/mm²) | Water intrusion (%) after 58 days |
|---|---|---|---|
| Comparative Example 1 | 0.06wt% TESPT | 12.73 | 0.035 |
| Comparative Example 2 | 0.06wt% VTES | 8.20 | 0.32 |
| Example 1 | 0.06wt% PVTES | 12.23 | 0.033 |
| Example 2 | 0.037wt% PVTES | 11.70 | 0.06 |

The polysiloxane coupling agent (examples 1 and 2) provides similar flexural strength and water intrusion performance as the polysulphide organosilane coupling agent (comparative example 1) and provides better performance than the monomeric coupling agent (comparative example 2). Example 2, with a coupling agent loading of 0.037wt%, provides the same loading of silane and vinyl groups as Comparative Example 2, and it is clear that the polysiloxane provides better performance than the monomeric coupling agent even at equivalent moles of silicon.

### Varying Polysiloxane Quantity

The quantity of polysiloxane coupling agent was varied to assess how this affects water intrusion properties. Samples based upon the quartz filler formulation were prepared using Method 2 as outlined above. The weight percentages of coupling agent are based upon the weight of the sulphur cement mortars. The water intrusion of the samples were measured. The results are given in Table 2:

**Table 2**

| | Coupling Agent | Water intrusion (%) after 57 days |
|---|---|---|
| Comparative Example 3 | None | 1. 03 |
| Example 3 | 0.0032wt% PVTES | 0.99 |
| Example 4 | 0.0056wt% PVTES | 0.52 |
| Example 5 | 0.0086wt% PVTES | 0.27 |
| Example 6 | 0.01wt% PVTES | 0.09 |
| Example 7 | 0.027wt% PVTES | 0.06 |
| Example 8 | 0.053wt% PVTES | 0.05 |

Samples based upon the fly ash filler formulation were prepared using Method 1 as outlined above. The weight percentages of coupling agent are based upon the weight of the sulphur cement mortars. The water intrusion of the samples were measured. The results are given in Table 3:

**Table 3**

| | Coupling Agent | Water intrusion (%) after 37 days |
|---|---|---|
| Comparative Example 4 | None | 1.31 |
| Example 9 | 0.005wt% PVTES | 0.75 |
| Example 10 | 0.0075wt% PVTES | 0.48 |
| Example 11 | 0.01wt% PVTES | 0.51 |
| Example 12 | 0.02wt% PVTES | 0.46 |
| Example 13 | 0.06wt% PVTES | 0.50 |

These examples demonstrate that increasing the quantity of polysiloxane reduces the water intrusion in the sulphur cement mortars.

### Use of Sulphur Pre-composition

Samples based upon the fly ash filler formulation were prepared using Method 3 as outlined above. Both unaged and aged sulphur pre-compositions were used (providing examples 15 and 16 respectively). The flexural strength and water intrusion of the samples were measured and compared with the results for a sulphur cement mortar containing no coupling agent (comparative example 5) and a sulphur cement mortar prepared according to method 1 (example 14). The results are given in Table 4:

**Table 4**

| | Coupling Agent | Method | Initial Flexural Strength (N/mm²) | Flexural strength (N/mm²) after 32 days under water | Water intrusion (%) |
|---|---|---|---|---|---|
| Comparative Example 5 | None | Method 1 (no coupling agent) | 11.15 | 5.3 | 1.29 (after 34 days) |
| Example 14 | 0.06wt% PVTES | Method 1 | 10.0 | 8.75 | 0.31 (after 34 days) |
| Example 15 | 0.06wt% PVTES | Method 3 (unaged) | 10.8 | 9.5 | 0.20 (after 34 days) |
| Example 16 | 0.06wt% PVTES | Method 3 (aged) | 11.0 | 7.95 | 0.52 (after 30 days) |

When compared to comparative example 5 (no coupling agent), the sulphur cement mortars prepared using method 3 exhibit good retention of flexural strength after immersion in water, and good water intrusion properties, even when the sulphur pre-composition has been aged. Use of Wax-based Pre-composition (not according to the invention)

Samples based upon the fly ash filler formulation were prepared using Method 4 as outlined above. Both unaged and aged sulphur pre-compositions were used (providing examples 18 and 19 respectively). The flexural strength and water intrusion of the samples were measured and compared with the results for a sulphur cement mortar containing no coupling agent (comparative example 6) and a sulphur cement mortar prepared according to method 1 (example 17). Both comparative example 6 and example 17 contained the same amount of carbon black and wax as examples 18 and 19. The results are given in Table 5:

**Table 5**

| | Coupling Agent | Method | Initial Flexural Strength (N/mm²) | Flexural strength (N/mm²) after 32 days under water | Water intrusion (%) |
|---|---|---|---|---|---|
| Comparative Example 6 | None | Method 1 (no coupling agent) | 9.35 | 4.4 | 1.16 (after 34 days) |
| Example 17 | 0.06wt% PVTES | Method 1 | 9 | 9 | 0.27 (after 34 days) |
| Example 18 | 0.06wt% PVTES | Method 4 (unaged) | 7.55 | 6.15 | 1.01 (after 34 days) |
| Example 19 | 0.06wt% PVTES | Method 4 (aged) | 7.35 | 5.75 | 0.95 (after 30 days) |

When compared to comparative example 6 (no coupling agent), sulphur cement mortars prepared using method 4 exhibit reasonable retention of flexural strength after immersion in water, and reasonable water intrusion properties, even when the wax-based pre-composition has been aged.

### Blends of Coupling Agents

Samples comprising blends of polysiloxane coupling agents with other coupling agents were prepared, based upon the quartz filler formulation using Method 1 as outlined above. The weight percentages of coupling agents are based upon the weight of the sulphur cement mortars. The coupling agents were polyvinyltriethyoxysilane (PVTES) bis(triethoxysilylpropyl)tetrasulfide (TESPT) and propyltrimethoxysilane (PTMS). The flexural strength and water intrusion of the samples were measured. The results are given in Table 6:

**Table 6**

| | Coupling Agents | Initial Flexural Strength (N/mm²) | Flexural strength (N/mm²) after 15 days under water | Water intrusion after 15 days (%) | Water intrusion after 76 days (%) |
|---|---|---|---|---|---|
| Example 20 | 0.06wt% PVTES | 13.5 | 11.8 | 0.04 | - |
| Example 21 | 0.015wt% PVTES | 10.5 | 9.5 | 0.02 | - |
| | 0.045wt% TESPT | | | | |
| Example 22 | 0.03wt% PVTES | 10.4 | 9.9 | 0.02 | - |
| | 0.03wt% TESPT | | | | |
| Example 23 | 0.045wt% PVTES | 12.6 | 11.1 | 0.02 | - |
| | 0.015wt% TESPT | | | | |
| Example 24 | 0.02wt% PVTES | 13.4 | - | - | 0.10 |
| | 0.02wt% TESPT | | | | |
| | 0.02wt% PTMS | | | | |
| Example 25 | 0.03wt% PVTES | 13.2 | - | - | 0.07 |
| | 0.03wt% TESPT | | | | |
| Example 26 | 0.012wt% PVTES | 11.3 | - | - | 0.10 |
| | 0.012wt% TESPT | | | | |
| | 0.036wt% PTMS | | | | |
| Example 27 | 0.03wt% PVTES | 10.3 | - | - | 0.28 |
| | 0.03wt% PTMS | | | | |
| Example 28 | 0.024wt% PVTES | 13.85 | - | - | 0.10 |
| | 0.024wt% TESPT | | | | |
| | 0.012wt% PTMS | | | | |

The polysiloxane coupling agents can be combined with other coupling agents to provide effective sulphur cement mortars.

## Claims

1. A sulphur cement pre-composition, comprising sulphur and a polysiloxane, which polysiloxane comprises repeat units of general formula (I): 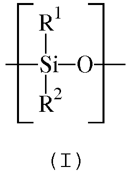 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

2. A sulphur cement product, comprising sulphur, a particulate inorganic material and a polysiloxane, which polysiloxane comprises repeat units of general formula (I) : 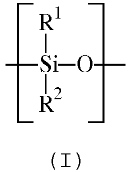 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

3. A process for the preparation of a sulphur cement pre-composition, comprising admixing sulphur with polysiloxane, which polysiloxane comprises repeat units of general formula (I): 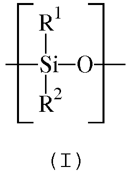 wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups.

4. A process for the preparation of a sulphur cement product comprising the steps of:
(a) admixing sulphur with a polysiloxane, which polysiloxane comprises repeat units of general formula (I) : 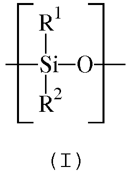
wherein R¹ is a hydrolysable group, wherein the hydrolysable group is an alkoxy, hydroxyl, acyloxy or aryloxy group or is a halogen and R² is a sulphur reactive functional group chosen from alkenyl, alkynyl, amine, thiol or sulphide groups;
and with a particulate inorganic material at a temperature at which sulphur is molten to obtain a molten sulphur cement product; and
(b) solidifying the molten sulphur cement product.

5. A sulphur cement pre-composition according to claim 1; a sulphur cement product according to claim 2; a process for the preparation of a sulphur cement pre-composition according to claim 3; a process for the preparation of a sulphur cement product according to claim 4; wherein a second organosilane additive is used in combination with the polysiloxane and the second organosilane is of general molecular formula (A) or (B):
(R⁵O)₃Si-A (A)
(R⁶O)₃Si-A' -Si(OR⁷)₃ (B)
wherein R⁵, R⁶, and R⁷ are independently C₁₋₆ alkyl, A is a univalent functional group chosen from thiol, sulphide, amine, alkenyl, C₁₋₂₄ alkyl or aryl groups, and A' is a divalent functional chosen from sulphide, amine, alkenyl, C₁₋₂₄ alkylene group or arylalkylene groups.

## Patentansprüche

1. Schwefelzement-Vorzusammensetzung, umfassend Schwefel und ein Polysiloxan, wobei das Polysiloxan Wiederholungseinheiten der allgemeinen Formel (I) umfasst: 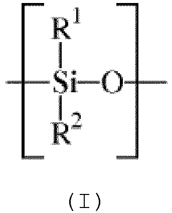 wobei R¹ eine hydrolysierbare Gruppe ist, wobei die hydrolysierbare Gruppe eine Alkoxy-, Hydroxy-, Acyloxy- oder Aryloxygruppe oder ein Halogen ist, und R² eine Schwefel-reaktive funktionelle Gruppe ist, die aus Alkenyl-, Alkinyl-, Amin-, Thiol- oder Sulfidgruppen ausgewählt ist.

2. Schwefelzement-Vorzusammensetzung, umfassend Schwefel, ein partikuläres anorganisches Material und ein Polysiloxan, wobei das Polysiloxan Wiederholungseinheiten der allgemeinen Formel (I) umfasst: 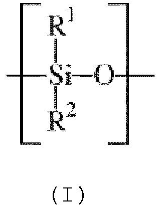 wobei R¹ eine hydrolysierbare Gruppe ist, wobei die hydrolysierbare Gruppe eine Alkoxy-, Hydroxy-, Acyloxy- oder Aryloxygruppe oder ein Halogen ist, und R² eine Schwefel-reaktive funktionelle Gruppe ist, die aus Alkenyl-, Alkinyl-, Amin-, Thiol- oder Sulfidgruppen ausgewählt ist.

3. Verfahren zur Herstellung einer Schwefelzement-Vorzusammensetzung, umfassend das Beimischen von Schwefel zu einem Polysiloxan, wobei das Polysiloxan Wiederholungseinheiten der allgemeinen Formel (I) umfasst: 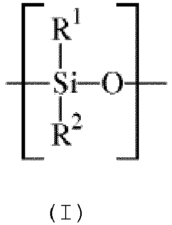 wobei R¹ eine hydrolysierbare Gruppe ist, wobei die hydrolysierbare Gruppe eine Alkoxy-, Hydroxy-, Acyloxy- oder Aryloxygruppe oder ein Halogen ist, und R² eine Schwefel-reaktive funktionelle Gruppe ist, die aus Alkenyl-, Alkinyl-, Amin-, Thiol- oder Sulfidgruppen ausgewählt ist.

4. Verfahren zur Herstellung eines Schwefelzementprodukts, umfassend die folgenden Schritte:
(a) Beimischen von Schwefel zu einem Polysiloxan, wobei das Polysiloxan Wiederholungseinheiten der allgemeinen Formel (I) umfasst: 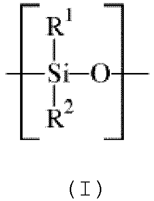 wobei R¹ eine hydrolysierbare Gruppe ist, wobei die hydrolysierbare Gruppe eine Alkoxy-, Hydroxy-, Acyloxy- oder Aryloxygruppe oder ein Halogen ist, und R² eine Schwefel-reaktive funktionelle Gruppe ist, die aus Alkenyl-, Alkinyl-, Amin-, Thiol- oder Sulfidgruppen ausgewählt ist; und mit einem partikulären anorganischen Material bei einer Temperatur, bei der Schwefel geschmolzen wird, um ein geschmolzenes Schwefelzementprodukt zu erhalten; und
(b) Erstarrenlassen des geschmolzenen Schwefelzementprodukts.

5. Schwefelzement-Vorzusammensetzung nach Anspruch 1; ein Schwefelzementprodukt nach Anspruch 2; ein Verfahren zur Herstellung einer Schwefelzement-Vorzusammensetzung nach Anspruch 3; ein Verfahren zur Herstellung eines Schwefelzementprodukts nach Anspruch 4; wobei ein zweites Organosilan-Additiv in Kombination mit dem Polysiloxan verwendet wird und das zweite Organosilan die allgemeine Formel (A) oder (B) aufweist:
(R⁵O)₃Si-A (A)
(R⁶O)₃Si-A' -Si(OR⁷)₃ (B)
wobei R⁵, R⁶ und R⁷ unabhängig C₁₋₆-Alkyl sind, A eine einwertige funktionelle Gruppe, ausgewählt aus Thiol-, Sulfid-, Amin-, Alkenyl-, C₁₋₂₄-Alkyl- oder Arylgruppen, ist und A' eine divalente funktionelle Gruppe, ausgewählt aus einer Sulfid-, Amin-, Alkenyl-, C₁₋₂₄-Alkylengruppe oder Arylalkylengruppen, ist.

## Revendications

1. Pré-composition de ciment au soufre, comprenant du soufre et un polysiloxane, lequel polysiloxane comprend des unités répétitives de formule générale (I) : 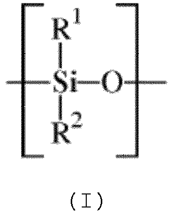 R¹ étant un groupe hydrolysable, le groupe hydrolysable étant un groupe alcoxy, hydroxyle, acyloxy ou aryloxy ou étant un halogène et R² étant un groupe fonctionnel réactif au soufre choisi parmi les groupes alcényle, alcynyle, amine, thiol ou sulfure.

2. Ciment au soufre, comprenant du soufre, un matériau minéral particulaire et un polysiloxane, lequel polysiloxane comprend des unités répétitives de formule générale (I) : 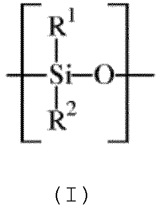 R¹ étant un groupe hydrolysable, le groupe hydrolysable étant un groupe alcoxy, hydroxyle, acyloxy ou aryloxy ou étant un halogène et R² étant un groupe fonctionnel réactif au soufre choisi parmi les groupes alcényle, alcynyle, amine, thiol ou sulfure.

3. Procédé de préparation d'une pré-composition de ciment au soufre, comprenant le mélange de soufre avec du polysiloxane, lequel polysiloxane comprend des unités répétitives de formule générale (I) : 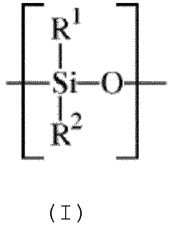 R¹ étant un groupe hydrolysable, le groupe hydrolysable étant un groupe alcoxy, hydroxyle, acyloxy ou aryloxy ou étant un halogène et R² étant un groupe fonctionnel réactif au soufre choisi parmi les groupes alcényle, alcynyle, amine, thiol ou sulfure.

4. Procédé de préparation d'un produit de ciment au soufre comprenant les étapes :
(a) de mélange de soufre avec un polysiloxane, lequel polysiloxane comprend des unités répétitives de formule générale (I) : 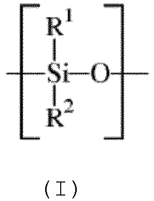
R¹ étant un groupe hydrolysable, le groupe hydrolysable étant un groupe alcoxy, hydroxyle, acyloxy ou aryloxy ou étant un halogène et R² étant un groupe fonctionnel réactif au soufre choisi parmi les groupes alcényle, alcynyle, amine, thiol ou sulfure ;
et avec un matériau minéral particulaire à une température à laquelle le soufre est fondu pour obtenir un produit de ciment au soufre fondu ; et
(b) de solidification du produit de ciment au soufre fondu.

5. Pré-composition de ciment au soufre selon la revendication 1 ; produit de ciment au soufre selon la revendication 2 ; procédé de préparation d'une pré-composition de ciment au soufre selon la revendication 3 ; procédé de préparation d'un produit de ciment au soufre selon la revendication 4 ; dans lesquels un second additif organosilane est utilisé en combinaison avec le polysiloxane et le second organosilane est de formule moléculaire générale (A) ou (B) :
(R⁵O)₃Si-A (A)
(R⁶O)₃Si-A'-Si(OR⁷)³ (B)
R⁵, R⁶, et R⁷ étant indépendamment un groupe alkyle en C₁₋₆, A étant un groupe fonctionnel monovalent choisi parmi les groupes thiol, sulfure, amine, alcényle, et les groupes alkyle ou aryle en C₁₋₂₄, et A' étant un groupe fonctionnel divalent choisi parmi les groupes sulfure, amine, alcényle, et les groupes alkylène ou arylalkylène en C₁₋₂₄.
